# EUROPEAN PATENT APPLICATION

(11) **EP 2 538 708 A1**
(43) Date of publication of application: **26.12.2012**
(21) Application number: 10856096.2
(22) Date of filing: 23.12.2010
(51) Int. Cl.: H04W 12/06

(54) **METHOD AND SYSTEM FOR PROCESSING VALUE-ADDED SERVICE**

(30) Priority: 16.08.2010 CN 201010255316
(71) Applicant: ZTE Corporation, Shenzhen, Guangdong 518057 (CN)
(72) Inventor: MO, Zehan, Shenzhen Guangdong 518057 (CN); DING, Yan, Shenzhen Guangdong 518057 (CN)
(74) Representative: Lampis, Marco
(86) International application number: PCT/CN2010/080184
(87) International publication number: WO 2012/022098

(57) **Abstract**

A method and apparatus for processing a value-added service are provided in the present invention, both of which can: acquire a service rule definition file, which includes at least one of definition of service entity, definition of service enumeration variable, definition of authentication mode control table and definition of authentication rule; acquire a service entity mapping file, which includes at least one of attributes of database and a corresponding relationship between the service entity and the database entity in the database; generate service rule execution codes according to the service rule definition file and service entity mapping file; run the service rule execution codes to implement service authentication. The purpose of fast service deployment is achieved by the technical solution.

## Description

### Technical Field

The present invention relates to the field of mobile communication technology, and in particular, to a method and apparatus for processing value-added service.

### Background Art

Value-added service is a comprehensive service integrated with voice, image, text and so on, and it has various contents and covers a wide range, and it is an aggregate of a plurality of services. The value-added service provides a series of service combinations and brings a brand-new experience to the users.

Due to the rapid development and fierce competition of the mobile value-added services, the support system needs to respond to the market demand quickly, so the system is required to rapidly implement authentication of new services.

In the related art, service rules are commonly realized by software coding, and each deployment of the service rule involves modification of the software codes, and new services are all implemented by deploying new software versions, so the deployment period is very long. The main function of a VAC (Value-added Service Platform) is to judge whether a mobile user has the conditions (these judging conditions are precisely the service rules of authentication) of using a certain value-added service according to the service rules and perform service authentication. Since the service deployment is slow, it will further lead to the result that the service authentication cannot be carried out in time, and hence the service cannot be implemented in time.

Therefore, there is an urgent need for a method for processing value-added service that can rapidly deploy services.

### Summary of the Invention

The present invention discloses a method and apparatus for processing value-added service in the examples so as to solve the problem of slow service deployment in the related art.

In order to solve the above problem, the technical solution of the present invention is carried out as follows:
a method for processing value-added service, comprising the following steps of:
acquiring a service rule definition file; the service rule definition file comprising at least one of definition of a service entity, definition of a service enumeration variable, definition of an authentication mode control table and definition of an authentication rule;
acquiring a service entity mapping file; the service entity mapping file comprising at least one of attributes of a database and a corresponding relationship between the service entity and a database entity in the database;
generating service rule execution codes according to the service rule definition file and service entity mapping file;
running the service rule execution codes to implement service authentication.

Before the step of acquiring a service entity mapping file, the method further comprises:
determining that the service rule definition file is valid.

Before the step of generating service rule execution codes according to the service rule definition file and service entity mapping file, the method further comprises:
determining that the service entity mapping file is valid;
checking presence of the service entity in the service entity mapping file;
determining that the service entity present in the service entity mapping file is matched with the attributes of the database entity.

The method further comprise:
receiving a first setting instruction, and modifying the service rule definition file according to the first setting instruction; and/or
receiving a second setting instruction, and modifying the service entity mapping file according to the second setting instruction.

When running the service rule execution codes to implement service authentication fails, the method further comprises:
generating an error result code according to the definition of the authentication rule, and displaying the error result code.

An apparatus for processing value-added service, comprising:
a first acquiring module, configured to acquire a service rule definition file; the service rule definition file comprising at least one of definition of a service entity, definition of a service enumeration variable, definition of an authentication mode control table and definition of an authentication rule;
a database, configured to store a database entity;
a second acquiring module, configured to acquire a service entity mapping file; the service entity mapping file comprising at least one of attributes of the database and a corresponding relationship between the service entity and the database entity in the database;
an authentication instruction generator, configured to generating service rule execution codes according to the service rule definition file and service entity mapping file;
an authentication engine, configured to run the service rule execution codes to implement service authentication.

The apparatus further comprises:
a verifying module, configured to verify validity of the service rule definition file before the second acquiring module acquires the service entity mapping file.

The verifying module is further configured to determine validity of the service entity mapping file before the authentication instruction generator generates service rule execution codes according to the service rule definition file and service entity mapping file;
the apparatus for processing value-added service further comprises:
a checking module, configured to check presence of the service entity in the service entity mapping file before the authentication instruction generator generates service rule execution codes according to the service rule definition file and service entity mapping file;
a determining module, configured to determine whether the service entity present in the service entity mapping file is matched with the attributes of the database entity.

The apparatus further comprises:
an operation maintaining interface, configured to receive a first setting instruction, and modify the service rule definition file according to the first setting instruction; and/or
receive a second setting instruction, and modify the service entity mapping file according to the second setting instruction.

The apparatus further comprises:
a failure processing module, configured to generate an error result code according to the definition of the authentication rule, and display the error result code when the authentication engine fails to run the service rule execution codes to implement service authentication.

In the technical scheme provided in the example, of the present invention, the service rule is defined in the service rule definition file, the content of the database entity part is defined in the service entity mapping file, and service rule execution codes are generated according to the service rule definition file and the service entity mapping file, thereby separating the service rule from the service rule execution codes, and only the service rule definition file and the service entity mapping file need to be modified when deploying services. Compared with the related art, the speed of service deployment is greatly increased, and the purpose of fast service deployment is achieved.

### Brief Description of Drawings

FIG. 1 is a flowchart of processing value-added service according to an example of the present invention;
FIG. 2 illustrates the apparatus for processing value-added service according to Example one of the present invention;
FIG. 3 illustrates the apparatus for processing value-added service according to Example two of the present invention;
FIG. 4 illustrates the apparatus for processing value-added service according to Example three of the present invention;
FIG. 5 illustrates the apparatus for processing value-added service according to Example four of the present invention;
FIG. 6 illustrates the apparatus for processing value-added service according to Example five of the present invention.

### Specific Embodiments

In order to solve the problem existing in the related art, the present invention provides a method and system for processing value-added service in the examples. In this technical solution, the service rule is defined in the service rule definition file, the content of the database entity part is defined in the service entity mapping file, and service rule execution codes are generated according to the service rule definition file and the service entity mapping file, thereby separating the service rule from the service rule execution codes, and only the service rule definition file and the service entity mapping file need to be modified when deploying services. Compared with the related art, the speed of service deployment is greatly increased, and the purpose of fast service deployment is achieved.

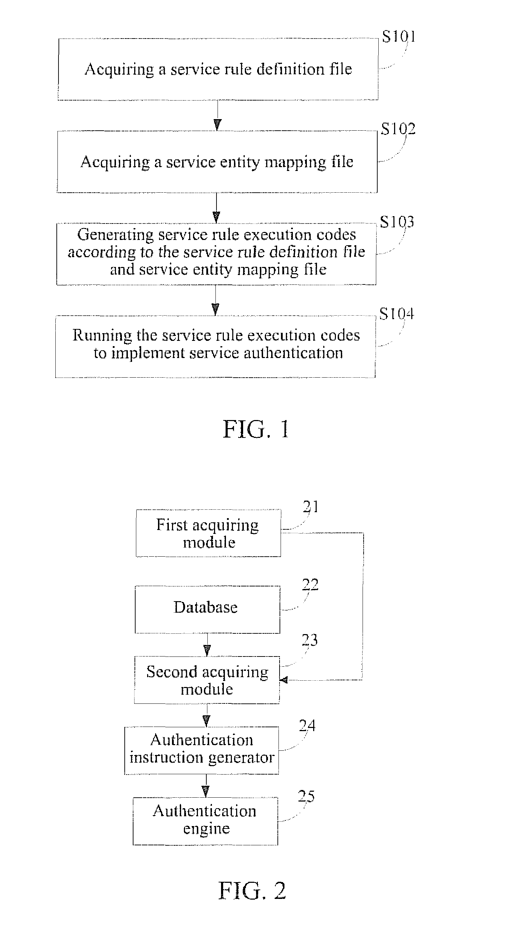

As shown in FIG. 1, the example of the present invention provides a method for processing value-added service, comprising the following steps:

In step 101, a service rule definition file is acquired.

Wherein, the service rule definition file is a file programmed with C language key words and service name, and the file describes the service rule in the form of pseudo codes, mainly including definition of a service entity (for example, user and attributes thereof, subscription relationship and the attributes thereof, the product and the attributes thereof and so on), definition of a service enumeration variable (for example service type, authentication scene and so on), definition of an authentication mode control table and definition of an authentication rule. The service rule definition file can eliminate uncertainty of the service rule described by natural language. The manner for acquiring the service rule definition file may be that the system provides one generation interface, and the generation interface provides the service entity and the attributes thereof, service enumeration variable, authentication mode control table and authentication rule for the operator to perform selection and combination so as to form the service rule, and the file is acquired after the service rule definition file is generated; or, the service rule definition file may be generated by the operator through editing by himself/herself, thereby acquiring the file.

The authentication mode control table will be introduced below. As a collective authentication platform, the VAC needs to access authentication of a plurality of service capabilities, for example, short messages, multi-media messages, WAP (Wireless Application Protocol), Multimedia Ring Back Tone, streaming media, downloading platform, IVR (Interactive Voice Response) platform, etc. The authentication rule for each service capability may be different. In addition, the authentication rule for each authentication scene, such as, subscription, ordering programs and issuing the customized service and so on, may be also different. The authentication mode control table is just for selecting different authentication modes according to the key field, such as source device type, service capability type and operation type, in the authentication message.

The authentication rule definition will be introduced below. The authentication rule definition may be represented by an authentication rule expression. The authentication rule expression is composed of sub-authentication functions plus a logic operator. For example, Product (productid) denotes product authentication, Service (Serviceid) denotes service authentication, Sub (productid, usercode) denotes subscription relationship authentication, and User (usercode) denotes user authentication. Each type of authentication allows presence of a plurality of functions, for example the specific rule of a special subscription relationship authentication Sub1 (productid, usercode) may be different from that of Sub (). One basic authentication rule expression may be written as:
Product ( productid ) &&Service ( serviceid ) &&User ( usercode ) &&Sub ( productid , usercode )

This authentication rule expression represents that this authentication mode requires to perform product authentication, service authentication, user authentication and subscription relationship authentication.

The service rule definition file will be better understood by taking a service rule definition file as an example.

```
   /* definition of the service enumeration variable */
   enum service type
   {
    short message,
    multi-media message,
    WAP,
   download,
   streaming media,
   IVR
   };

   enum authentication scene
   {
   subscription,
   ordering programs,
   unsubscription,
   issuing the subscribed service
   };

   /*definition of the service entity and the attributes thereof */
   typedef user {
               number,
               payment attribute,
               home location,
               status
     } ;

  typedef subscription relationship {
               number,
               product ID,
                effective date,
                status
      };

   typedef product {
                product ID,
                product name,
                effective date,
                status
      };

   enum product.status (
    normal,
    pause,
    log out
     };

   /*definition of the authentication mode control table */
   Switch (service capability, authentication scene)
   {
   case short message, subscription:
    product authentication (product) && user authentication (user);
    break ;
   case short message , ordering programs:
   case multi-media message, subscription:
   case multi-media message, unsubscription:
  }

  /*definition of the authentication rule */

  product authentication (product)
  {
    if (product.status == 'normal' ) return 0 ;
    else return 1 ;
    }
```

Generally, one service rule definition file can cover service rules of various services.

In step 102, a service entity mapping file is acquired.

Wherein, the service entity mapping file comprises at least one of the attributes of a database (for example the link of the database, the type of the database, and the user of the database) and a corresponding relationship between the service entity and a database entity in said database. Wherein, the database comprises a plurality of database entities. The database entity is a data expression of the service entity and the attributes thereof, and the service entity mapping file maps the service entity and the attributes thereof to the table and the fields of the table in the database. The type of the database includes Oracle, Sql_server, Sybase and so on. The link of the database refers to the storage address of the database. The user of the database refers to the user having the operation authority for the database.

In addition, before the step 102 is executed, the validity of the service rule definition file can also be verified, and when it is valid, step 102 is executed, otherwise, the service rule definition file is modified until becoming valid, and then step 102 is executed. For example, the key word in the service rule definition file is compared with the key word in the key word list that is pre-designated to check whether they are matched, if yes, the file is valid, otherwise, the file is invalid. The benefit of doing so is that the valid implementation of the service can be ensured.

The service entity mapping file will be better understood by taking a service entity mapping file as an example.

Databasetype Oracle
#define default databaselink tosrvdatabase
#define default username=ssrv
#define username user1=ssrv1
#define username user2=ssrv2
#define databaselink toserver 1
#define databaselink toserver2

enum.service type sys_code.codename (codeid='service type')
enum.authentication scene ssy_code.codename (codeid=' authentication scene ')
enum.product.status ssy_code.codename (codeid=' praduct.status ')
typedef.user user1.tele_user (usercode, paytype, location, status)
typedef.subscription relationship
user2.subscription@toserver2 (usercode, productid, createdate, status)
typedef.product user1.product (productid, name, effectdate, status)
funcdef.product authenticationuser1.productcheck ( user1.product )

Wherein, the above "#define default username=ssrv" represents configuring default database user name; if the database entity in the service entity mapping file does not have the corresponding database user name, it is defaulted to be a default database user. The above "enum.service type sys_code.codename (codeid='service type')" represents configuring the corresponding relationship beween the "enum.service type" and the records in the database in the service rule definition file, i.e., the value of the "service type" corresponds to the codename field of the table sys_code in the database. The meanings of other sentences are similar.

In step 103, service rule execution codes are generated according to the service rule definition file and service entity mapping file.

Wherein, the service rule definition file is equivalent to pseudo codes, and the service entity mapping file is equivalent to data configuration, and the pseudo codes are converted into service rule execution codes according to the data configuration. Specifically, the service rule execution codes are generated according to the content of the service rule definition file and the database entity corresponding to the content in the service entity mapping file.

For example, according to the content of the service rule definition file:
product authentication (product)

```
  {
  if (product.status == 'normal' ) return 0;
  else return 1 ;
   }
   and the content of the service entity mapping file:
   enum.product.status ssy_code.codename (codeid='product.status' )
   typedef.product user1.product (productid, name, effectdate, status)
   funcdef.product authenticationuser1.productcheck (user1.product)
   the following execution codes will be generated:
   Create function user1.productcheck (i_product in user1.product%ROWTYPE ) return
   number ;
   As
   Begin
   if ( i_product.status == '1' ) return 0 ;
   else return 1 ;
  End ;
```

Before the step 103 is executed, the following steps may also be executed:
determining validity of the service entity mapping file; for example, the key word in the service entity mapping file is compared with the key word in the key word list that is pro-designated to check whether they are matched, if yes, the file is valid, otherwise, the file is invalid;
checking the presence of the service entity in the service entity mapping file;
judging whether the service entity present in the service entity mapping file is matched with the attributes of the corresponding database entity; for example, it is judged whether the attributes of the service entity correspond to the fields in the table of the corresponding database entity one by one, and whether the type of the attribute of the service entity is matched with the type of the table field of the corresponding database entity.

Step 103 is executed only when the service entity mapping file is determined to be valid and the service entity present in the service entity mapping file is matched with the attributes of the corresponding database entity, thereby ensuring valid and smooth implementation of the service.

In step 104, the service rule execution codes are run to implement service authentication.

When the step of running the service rule execution codes to implement service authentication fails, the following step may also be executed:
generating an error result code according to the definition of the authentication rule, and displaying the error result code.

Since the error result code of authentication is important means for locating the reason of authentication failure, the error result code may be formed by way of assembling sub-authentication return codes. For example, as for the authentication rule expression:
Product (productid ) &&Service ( serviceid ) &&User ( usercode ) &&Sub ( productid , usercode )

The form of the authentication error result code corresponding to the above expression is Product1 or Service3, wherein Product indicates product sub-authentication, the code 1 after Product indicates the specific error code, Service indicates service sub-authentication, and the code 3 after Service indicates that the service authentication fails, and the specific error code is 3. The system executes sub-authentications one by one according to the sequence of the sub-authentications in the authentication rule expression, and if authentication failure occurs, the corresponding error result code is returned, including: the name of the failing sub-authentication and the corresponding error code.

In order to better serve the customers, the operator often deploys some new services, modifies service rules or modifies database entities and so on, at this moment the method provided in the example of the present invention may execute the following steps:
receiving a first setting instruction, and modifying the service rule definition file according to the first setting instruction; and/or
receiving a second setting instruction, and modifying the service entity mapping file according to the second setting instruction.

For example, the system will provide one graphical operation maintaining interface, and for the service rule definition file: the system will initialize some original authentication operations, such as user home location authentication, and blacklist authentication (these names are displayed to the user in the form of text); and initialize the attributes of the system operation objects, such as user attributes (number, payment type, home location), and product attributes (credit, charging mode and so on).

When deploying new services, the operator can add a new service entity or service rule in the service rule definition file through the operation maintaining interface, and correspondingly add a new database entity in the database, and meanwhile, a corresponding relationship between the new service entity and the newly added database entity is added in the service entity mapping file.

When modifying the service rule, the operator can combine the above attributes (forming a first setting instruction) through the operation maintaining interface to form a simple judging condition and make it as part of the service rule, thereby modifying the service rule in the service rule definition file.

When modifying the database entity, the operator may modify the content of database entity in the service entity mapping file through the operation maintaining interface, and thus the direction of the database entity can be dynamically adjusted, thereby realizing online switching of the database entity; the direction of the database entity can be dynamically adjusted, thereby achieving load balance; different types of databases can be supported through configuring different database types, and the dependence of the service system on the database is reduced.

The above examples suggest that the technical scheme provided in the examples of the present invention can achieve the purpose of rapid service deployment in contrast with the related art.

As shown in FIG. 2, an example of the present invention provides an apparatus for processing value-added service, comprising:
a first acquiring module 21, configured to acquire a service rule definition file; the service rule definition file comprising at least one of definition of a service entity, definition of a service enumeration variable, definition of an authentication mode control table and definition of an authentication rule;
a database 22, configured to store a database entity;
a second acquiring module 23, configured to acquire a service entity mapping file; the service entity mapping file comprising attributes of the database 22 and a corresponding relationship between the service entity and the database entity in the database 22;
an authentication instruction generator 24, configured to generate service rule execution codes according to the service rule definition file and service entity mapping file;
an authentication engine 25, configured to run the service rule execution codes to implement service authentication.

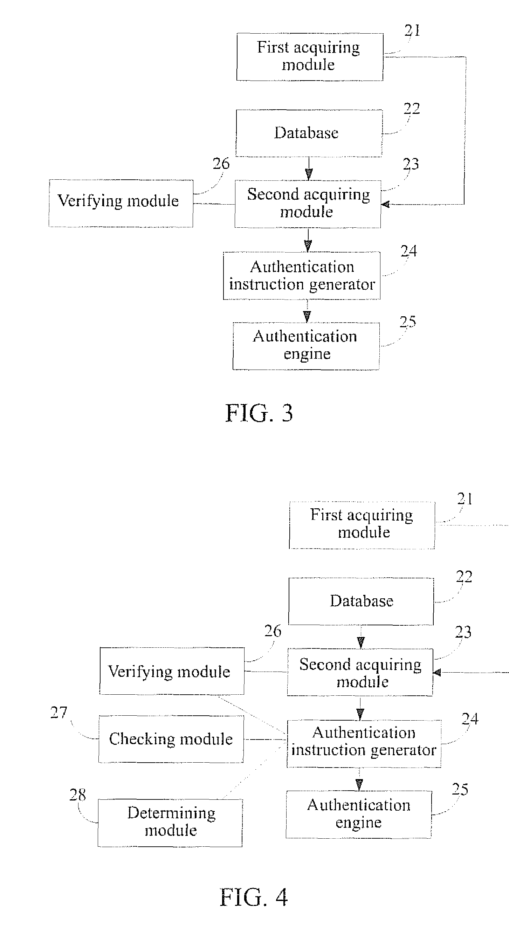

As shown in FIG. 3, the apparatus for processing value-added service in FIG. 2 further comprises:
a verifying module 26, configured to verify validity of the service rule definition file before the second acquiring module 23 acquires the service entity mapping file.

In addition, the verifying module 26 is further configured to determine validity of the service entity mapping file before the authentication instruction generator 24 generates service rule execution codes according to the service rule definition file and service entity mapping file;
at this moment, as shown in FIG. 4, the apparatus for processing value-added service in FIG. 3 further comprises:
a checking module 27, configured to check presence of the service entity in the service entity mapping file before the authentication instruction generator 24 generates service rule execution codes according to the service rule definition file and service entity mapping file;
a determining module 28, configured to determine whether the service entity present in the service entity mapping file is matched with the attributes of the corresponding database entity.

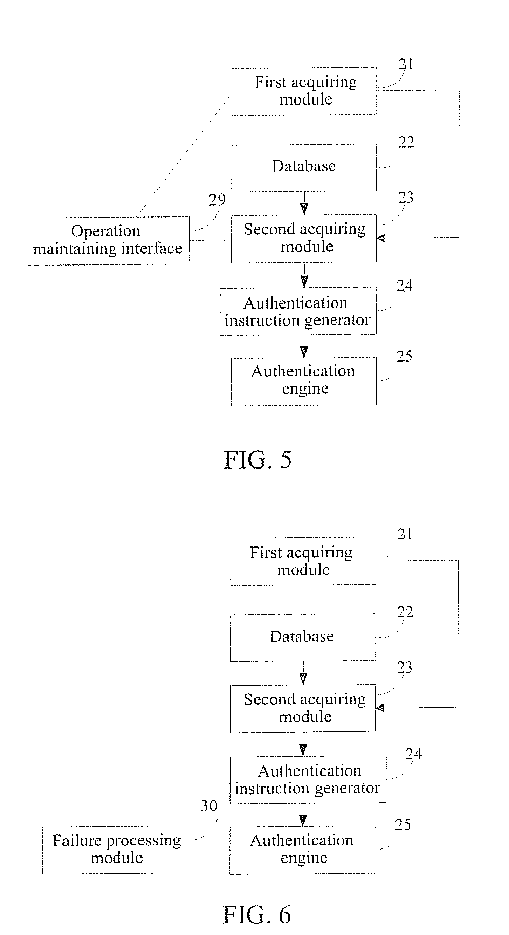

As shown in FIG. 5, the apparatus for processing value-added service in FIG. 2 (or FIG. 3 or 4) further comprises:
an operation maintaining interface 29, configured to receive a first setting instruction, and modify the service rule definition file according to the first setting instruction; and/or receive a second setting instruction, and modify the service entity mapping file according to the second setting instruction.

As shown in FIG. 6, the apparatus for processing value-added service in FIG. 2 (or FIG. 3 or 4) further comprises:
a failure processing module 30, configured to generate an error result code according to the definition of the authentication rule, and display the error result code when the authentication engine 25 fails to run the service rule execution codes to implement service authentication.

As can be seen, in the technical scheme provided in the example of the present invention, the service rule is defined in the service rule definition file, the content of the database entity part is defined in the service entity mapping file, and service rule execution codes are generated according to the service rule definition file and the service entity mapping file, thereby separating the service rule from the service rule execution codes, and only the service rule definition file and the service entity mapping file need to be modified when deploying services. Compared with the related art, the speed of service deployment is greatly increased, and the purpose of fast service deployment is achieved.

The above examples are preferred embodiments of the present invention. It should be pointed out that a person having ordinary skill in the art can make various improvements and modifications without departing from the principle of the present invention. These improvements and modifications should be regarded to be within the protection scope of the present invention.

## Claims

1. A method for processing value-added service, comprising:
acquiring a service rule definition file; the service rule definition file comprising at least one of definition of a service entity, definition of a service enumeration variable, definition of an authentication mode control table and definition of an authentication rule;
acquiring a service entity mapping file; the service entity mapping file comprising at least one of attributes of a database and a corresponding relationship between the service entity and a database entity in the database;
generating service rule execution codes according to the service rule definition file and service entity mapping file;
running the service rule execution codes to implement service authentication.

2. The method according to claim 1, wherein, before the step of acquiring a service entity mapping file, the method further comprises:
determining that the service rule definition file is valid.

3. The method according to claim 1 or 2, wherein, before the step of generating service rule execution codes according to the service rule definition file and service entity mapping file, the method further comprises:
determining that the service entity mapping file is valid;
checking presence of the service entity in the service entity mapping file;
determining that the service entity present in the service entity mapping file is matched with attributes of the database entity.

4. The method according to claim 1 or 2, wherein, the method further comprises:
receiving a first setting instruction, and modifying the service rule definition file according to the first setting instruction; and/or
receiving a second setting instruction, and modifying the service entity mapping file according to the second setting instruction.

5. The method according to claim 1 or 2, wherein, when running the service rule execution codes to implement service authentication fails, the method further comprises:
generating an error result code according to the definition of the authentication rule, and displaying the error result code.

6. An apparatus for processing value-added service, comprising:
a first acquiring module, configured to acquire a service rule definition file; the service rule definition file comprising at least one of definition of a service entity, definition of a service enumeration variable, definition of an authentication mode control table and definition of an authentication rule;
a database, configured to store a database entity;
a second acquiring module, configured to acquire a service entity mapping file; the service entity mapping file comprising at least one of attributes of the database and a corresponding relationship between the service entity and the database entity in the database;
an authentication instruction generator, configured to generate service rule execution codes according to the service rule definition file and service entity mapping file;
an authentication engine, configured to run the service rule execution codes to implement service authentication.

7. The apparatus according to claim 6, wherein, the apparatus further comprises:
a verifying module, configured to verify validity of the service rule definition file before the second acquiring module acquires the service entity mapping file.

8. The apparatus according to claim 7, wherein,
the verifying module is further configured to determine validity of the service entity mapping file before the authentication instruction generator generates the service rule execution codes according to the service rule definition file and service entity mapping file;
the apparatus for processing value-added service further comprises:
a checking module, configured to check presence of the service entity in the service entity mapping file before the authentication instruction generator generates the service rule execution codes according to the service rule definition file and service entity mapping file;
a determining module, configured to determine whether the service entity present in the service entity mapping file is matched with attributes of the database entity.

9. The apparatus according to any one of claims 6 to 8, wherein, the apparatus further comprises:
an operation maintaining interface, configured to receive a first setting instruction, and modify the service rule definition file according to the first setting instruction; and/or
to receive a second setting instruction, and modify the service entity mapping file according to the second setting instruction.

10. The apparatus according to any one of claims 6 to 8, wherein, the apparatus further comprised:
a failure processing module, configured to generate an error result code according to the definition of the authentication rule, and display the error result code when the authentication engine fails to run the service rule execution codes to implement service authentication.
